# EUROPÄISCHE PATENTSCHRIFT

(11) **EP 2 369 328 B1**
(45) Veröffentlichungstag und Bekanntmachung des Hinweises auf die Patenterteilung: **11.05.2022**
(21) Anmeldenummer: 11159318.2
(22) Anmeldetag: 23.03.2011
(51) Int. Cl.: G01N 21/90

(54) **VORRICHTUNG UND VERFAHREN ZUM UNTERSUCHEN VON BEFÜLLTEN BEHÄLTNISSEN AUF FREMDKÖRPER**
METHOD AND DEVICE FOR EXAMINING IMPURITIES IN FILLED CONTAINERS
PROCÉDÉ ET DISPOSITIF POUR EXAMINER DES IMPURETÉS DANS DES RÉCIPIENTS REMPLI

(30) Priorität: 23.03.2010 DE 102010012570
(43) Veröffentlichungstag der Anmeldung: 28.09.2011
(73) Patentinhaber: Krones AG, 93073 Neutraubling (DE)
(72) Erfinder: NIEDERMEIER, Anton, 93326, Offenstetten (DE)
(74) Vertreter: Bittner, Bernhard

(56) Entgegenhaltungen:
- EP-A2- 1 241 467
- EP-A2- 2 369 328
- DE-T2- 69 838 155
- JP-A- H07 128 257
- US-A1- 2008 291 438
- Anonymous: "CCD-Sensor - Wikipedia", , 11 July 2016 (2016-07-11), XP055287190, Retrieved from the Internet: URL:https://de.wikipedia.org/wiki/CCD-Sens or [retrieved on 2016-07-11]

## Beschreibung

Die vorliegende Erfindung bezieht sich auf ein Verfahren und eine Vorrichtung zum Inspizieren von befüllten Behältnissen und insbesondere ein Verfahren und eine Vorrichtung zum Untersuchen von befüllten Behältnissen auf Fremdkörper. Aus dem Stand der Technik sind derartige Inspektionsvorrichtungen bekannt, welche befüllte Behältnisse auf Verunreinigungen wie beispielsweise Glassplitter untersuchen. So beschreibt die DE 102 577 49 B4 eine Inspektionsmaschine, welche die gefüllten verschlossenen Behälter auf Verunreinigungen wie z. B. Glassplitter untersucht. Dabei wird der Behälter zunächst in Rotation um die eigene Achse versetzt bis das Produkt d. h. die Flüssigkeit der Rotation zumindest teilweise folgt. Anschließend wird der Behälter gestoppt, die Flüssigkeit rotiert weiter. In diesem Zustand wird der Behälter beleuchtet und mittels einer Kamera beobachtet. Die Bewegung der Flüssigkeit ist im Kamerabild nicht zu sehen, die Verunreinigung und deren Bewegungen hingegen schon. Unter Verunreinigungen werden im Rahmen dieser Beschreibungen unter anderem Glassplitter oder auch andere Feststoffe verstanden, die in dem Produkt nicht erwünscht sind. Insbesondere gefährlich sind für den Endverbraucher Glassplitter. Dabei wird im Falle der DE 102 577 49 B4 dargestellt, dass der Behälter durch eine Lampengasse fährt, die pro Kameraaufnahme gleichzeitig angesteuert wird. Bei manchen Getränken ist jedoch eine derartige Drehung des Behälters um seine Längsachse nicht erwünscht.

Die EP 20 217 81 A1 beschreibt ein Verfahren zur Beleuchtung, dass auf eine geeignete Untersuchung von Fehlern wie beispielsweise Fremdkörpern in dem Behälter und insbesondere auch die Unterscheidung von unechten Fehlern wie Glaserhebungen auf dem Behälter gerichtet ist. Bei diesem Verfahren wird der Behälter mit unterschiedlichen Leuchtfarben aus verschiedenen Richtungen beleuchtet. Dabei soll eine Lichtfarbe den Behälter sowie das Füllgut durchleuchten (so genanntes Durchlicht) und gegebenenfalls die Produktverunreinigung erhellen. Die andere Lichtfarbe, welche als Auflicht fungiert, soll nur die zur Kamera geneigte äußere Mantelfläche beleuchten und die Glaserhebungen markieren. Es kann jedoch hierbei das Problem auftreten, dass die Glaserhebung durch das Durchlicht ebenso erhellt markiert wird wie der im Produkt befindliche Fremdgegenstand. In diesem Falle soll das zusätzliche Auflicht dazu beitragen, dass nur die Glasprägung erhellt wird, um eine Unterscheidung zwischen Glaserhebung, Glasprägung und dem Fremdgegenstand zu ermöglichen. Dieses Verfahren ist jedoch relativ aufwendig und oftmals auch in der Auswertung problematisch.

Die Druckschrift 2008 / 291438 A1 beschreibt eine Vorrichtung und ein Verfahren zum Prüfen von Behältnissen. Dabei sind wenigstens zwei Kameras und eine oder mehrere fest angeordnete Lichtquellen vorhanden. Weiterhin werden von den Kameras aufgenommene Bilder miteinander verglichen und hinsichtlich Fremdsubstanzen untersucht. Der Vergleich soll dazu dienen, zu erkennen, ob sich die erkannten Fremdsubstanzen innerhalb oder außerhalb des Behältnisses befinden.

Aus der Druckschrift JP H07 128257 A ist ebenso ein Verfahren zum inspizieren von Flüssigkeiten bekannt, welches ermitteln soll, ob Fremdsubstanzen in der Flüssigkeit enthalten sind.

Auch die Druckschriften DE 698 38 155 T2 und EP 1 241 467 A2 beschreiben Verfahren bzw. Vorrichtungen zum Ermitteln von Fremdsubstanzen in Flüssigkeiten.

Weiterhin hat sich in der Vergangenheit gezeigt, dass insbesondere CO₂-haltige Produkte wie Bier, Cola, Limonade und andere bei der Rotation um die eigene Achse je nach CO₂ Gehalt und Lösungsgrad des CO₂ im Produkt feine Gasbläschen erzeugen können. Diese bewegen sich ebenso wie mögliche Fremdkörper im Produkt. Eine Unterscheidung von Gasbläschen und Fremdkörpern ist dabei im Stand der Technik kaum möglich. Die Ausleitung aufgrund von Gasbläschen und nicht aufgrund von Fremdkörpern kann die Folge sein. Es wäre grundsätzlich möglich, diesen Umstand durch eine lange Verweilzeit zwischen Füllen und Inspizieren entgegen zu wirken, was jedoch zu langen Transportwegen und sehr großen Massentransporteuren führen würde. Dies wiederum wäre sehr teuer bzw. auch nachträglich nicht realisierbar.

Daneben ist es bekannt, dass einige Produkte, bedingt durch ihren Ursprung oder durch ihren Herstellungsprozess organische nicht gelöste Anteile beinhalten. So ist es beispielsweise bekannt, dass in Säften Rückstände oder auch gewollt Fruchtfleisch, in Bieren Reste aus der Herstellung die nicht herausgefiltert wurden oder Teile die zum Teil ungelöst sind, wie z. B. bei naturtrüben Hefeweißbier die Hefe, vorhanden sind. Auch wenn diese Teilchen für das menschliche Auge kaum wahrnehmbar sind, können sie beispielsweise beim Drehen des Behälters um die eigene Achse als Kondensationspunkte wirken, so dass auch hier Gasbläschen entstehen. Beide der genannten Körper in der Flüssigkeit, sowohl die Gasbläschen als auch die ungelösten organischen Anteile im Produkt werden durch die Inspektion sichtbar und bewegen sich genauso wie Glasscherben im Produkt und können daher von Glasscherben und anderen ungewollten Fremdkörpern nicht unterschieden werden.

Auch die Größe und die Form dieser jeweiligen ʺVerunreinigungen" unterscheidet sich im Kamerabild zunächst nicht von Glasscherben. Diese Körper stellen jedoch keinen Mangel für das abgefüllte Produkt dar oder sind sogar Teil dieses Produkts.

Der vorliegenden Erfindung liegt daher die Aufgabe zugrunde, eine Vorrichtung und ein Verfahren zur Verfügung zu stellen, welche eine bessere Trennung zwischen Fremdkörpern wie Glasscherben einerseits und bewusst bzw. gewollt in dem Produkt vorhandenen Körpern wie Luftbläschen oder auch Fruchtfleischstückchen erlauben. Insbesondere Glasscherben stellen einen erheblichen Mangel bis zum gesundheitsschädlichen Risiko dar.

Diese Aufgaben werden erfindungsgemäß durch die Gegenstände der unabhängigen Ansprüche 1 und 5 gelöst. Vorteilhafte Ausführungsformen und Weiterbildungen sind Gegenstand der Unteransprüche.

Eine erfindungsgemäße Vorrichtung zum Inspizieren von befüllten Behältnissen weist eine erste Strahlungseinrichtung auf, welche Strahlung auf das zu untersuchende Behältnis - genauer die in dem Behältnis befindliche, zu untersuchende Flüssigkeit - richtet sowie eine Bildaufnahmeeinrichtung welche wenigstens einen Teil der von der ersten Strahlungseinrichtung auf das Behältnis bzw. den Inhalt des Behältnisses gerichteten und von dem Behältnis reflektierten oder gestreuten - allgemein der von der Flüssigkeit umgelenkten - Strahlung aufnimmt. Dabei ist die Bildaufnahmeeinrichtung zur Aufnahme eines ortsaufgelösten Bildes ausgelegt.

Erfindungsgemäß weist die Vorrichtung wenigstens eine weitere Strahlungseinrichtung oder eine weitere Bildaufnahmeeinrichtung auf, wobei die Strahlungseinrichtung und die Bildaufnahmeeinrichtung derart angeordnet sind, dass eine Aufnahme der auf die Flüssigkeit gerichteten und von der Flüssigkeit reflektierten oder gestreuten Strahlung unter wenigstens zwei voneinander unterschiedlichen Bildaufnahmenpfaden erfolgt. Genauer gesagt wird diejenige Strahlung beobachtet, welche von der Flüssigkeit umgelenkt wurde, d.h. deren (Strahl)-Richtung von der Flüssigkeit geändert wurde. Diese Umlenkung kann dabei infolge einer Reflektion auftreten oder auch infolge einer Streuung.

Erfindungsgemäß weist die Vorrichtung weiterhin eine Vergleichseinrichtung auf, welche die zwei über unterschiedliche Aufnahmepfade aufgenommene Bilder miteinander vergleicht. Weiterhin weist die Vorrichtung eine Auswerteeinheit auf, die die von der Vergleichseinrichtung gewonnenen Daten in der Art auswertet, dass eine Stelle, die in mehreren Aufnahmen sichtbar ist, einer Kategorie "Gasbläschen und/oder produktspezifische Partikel" zugeordnet wird und eine Stelle, die in einer Aufnahme sichtbar ist und in einer anderen nicht, einer Kategorie "Glasscherbe" zugeordnet wird.

Bevorzugt wird daher die Strahlung insbesondere auf die in dem Behältnis befindliche Flüssigkeit gerichtet. Vorteilhaft handelt es sich bei dem Behältnis um ein bereits verschlossenes Behältnis.

Es wird daher vorgeschlagen, das von dem Behältnis bzw. der Flüssigkeit gestreute und reflektierte Licht unter unterschiedlichen Positionen festzustellen. Dabei ist es möglich, dass beispielsweise zwei Strahlungseinrichtungen an unterschiedlichen Positionen angeordnet sind und die Strahlung auf das Behältnis bzw. den Inhalt des Behältnisses richten und das jeweils von dem Inhalt des Behältnisses reflektierte und/oder gestreute Licht von der Bildaufnahmeeinrichtung aufgenommen wird.

Entsprechend wäre es auch denkbar, lediglich eine Strahlungseinrichtung vorzusehen sowie zwei Bildaufnahmeeinrichtungen, welche an unterschiedlichen Positionen gegenüber dem Behältnis angeordnet sind. Durch diese Vorgehensweise ist es möglich, innerhalb der Flüssigkeit befindliche und für die Flüssigkeit charakteristische Partikel, insbesondere produktspezifische Partikel von in der Flüssigkeit befindlichen Fremdkörpern zu unterscheiden.

Auf diese Weise ist es beispielsweise möglich, organische nicht gelöste Bestandteile und Gasbläschen einerseits (also für die Flüssigkeit charakteristische Partikel) von Glasscherben (also Fremdkörpern) andererseits zu unterscheiden. Dabei ist zu berücksichtigen, dass erstere Bestandteile und auch Gasbläschen das auf sie auftreffende Licht in alle Richtungen streuen. Dies bedeutet, dass unabhängig, von welcher Richtung her sie mit Licht angestrahlt werden diese Bestandteile stets streuen. Genauer gesagt hat der Grenzübergang von Gasbläschen zur Flüssigkeit einen hohen optischen Brechungsindex wobei Licht aufgrund der Kugelform in alle Richtungen gestreut wird. Aus diesem Grunde werden die Gasbläschen immer wenn sie mit Licht angestrahlt werden, gesehen. Nicht gelöste organische Feststoffe, die mit Licht angestrahlt werden, streuen das auftreffende Licht diffus. Dies bedeutet, dass auch diese Feststoffe, wenn sie mit Licht angestrahlt werden, immer gesehen werden.

Die Glasscherben hingegen weisen an ihrem Grenzübergang zur Flüssigkeit einen kleinen Brechungsindex auf. Falls daher Glasscherben mit Licht angestrahlt werden, wird dieses kaum abgelenkt, nur in günstigen Stellungen aus Lichtorientierung, Glasscherbenform und Beobachtungspunkt der Bildaufnahmeeinrichtung wird Licht über die Glasscherben auf den Beobachter abgelenkt. Falls das Licht nun unterschiedliche Pfade einnimmt, werden die Glasscherben nur bei einer dieser Konstellationen auf die Bildaufnahmeeinrichtung gelangen. Bietet man daher Licht aus vielen Richtungen an, aber kein Licht trifft direkt auf den Beobachter so ist die Wahrscheinlichkeit höher, eine geeignete Konstellation zur Scherbenerkennung zu finden.

Vorteilhaft gelangt das Licht auf einer Vielzahl von Bildaufnahmepfaden durch die Flüssigkeit, wobei vorteilhaft wenigstens drei, bevorzugt wenigstens 4 und bevorzugt wenigstens 6 Pfade vorgesehen sind.

Auch wäre es denkbar, dass sich eine Strahlungseinrichtung bewegt und während der Bewegung mehrere Aufnahmen gemacht werden oder auch ein Video aufgenommen wird, in dessen zeitlichem Verlauf vorübergehend ein Reflex des Scherbens auftaucht. Auch wäre es möglich, m Strahlungseinrichtungen und n Bildaufnahmeeinrichtungen vorzusehen, damit das Licht auf n x m Bildaufnahmepfaden beobachtet werden kann.

Unter dem Begriff Bildaufnahmepfad wird derjenige Pfad der Strahlung verstanden, den diese ausgehend von der Strahlungseinrichtung über die Flüssigkeit hin zu der Bildaufnahmeeinrichtung einnimmt. Unter unterschiedlichen Bildaufnahmepfaden werden Bildaufnahmepfade verstanden, welche sich in wenigstens einem Abschnitt voneinander unterscheiden. Bevorzugt unterscheiden sich zwei unterschiedliche Bildaufnahmepfade entweder in demjenigen Abschnitt, der von der Strahlungseinrichtung bis zu der zu untersuchenden Flüssigkeit führt (insbesondere, wenn zwei unterschiedliche Strahlungseinrichtungen verwendet werden) oder in demjenigen Abschnitt, der von der zu untersuchenden Flüssigkeit zu der Bildaufnahmeeinrichtung führt (insbesondere wenn zwei unterschiedliche Bildaufnahmeeinrichtungen verwendet werden).

Vorteilhaft ist daher die Vorrichtung derart ausgelegt, dass keine Strahlung unmittelbar von der Strahlungseinrichtung zu der Bildaufnahmeeinrichtung gelangen kann. So wäre es denkbar, dass diese beiden Elemente voneinander abgetrennt sind. Die Flüssigkeit wird vorteilhaft über wenigstens einen Bildaufnahmepfad, vorteilhaft über alle Bildaufnahmepfade mit Auflicht beobachtet.

Damit werden diese oben beschriebenen Eigenschaften ausgenutzt, wobei Feststoffe und Gasbläschen immer gesehen werden, egal aus welcher Richtung das Licht kommt und Glasscherben nur durch Licht aus einer zum Beobachter und der Scherben optimalen Richtung gesehen werden. Es erfolgt daher in jedem Fall eine Beobachtung unter wenigstens zwei unterschiedlichen Winkeln.

Bei einer bevorzugten Ausführungsform weist die Vorrichtung zwei Strahlungseinrichtungen auf. Diese beleuchten dabei das Behältnis bzw. dessen Inhalt aus unterschiedlichen Richtungen und die Bildaufnahmeeinrichtung nimmt jeweils das aus diesen unterschiedlichen Richtungen kommende Licht auf.

Bei einer weiteren vorteilhaften Ausführungsform weist die Vorrichtung eine Steuerungseinrichtung auf, welche bewirkt, dass Bildaufnahmen über die unterschiedlichen Aufnahmenpfade innerhalb eines Zeitabschnitts erfolgen, der unter 500 µs, bevorzugt unter 300 µs und besonders bevorzugt unter 100 µs liegt. So ist es möglich, dass im Wesentlichen zum selben Zeitpunkt mehrere Aufnahmen des Behältnisses bzw. dessen Inhalts aufgenommen werden, wobei jede Aufnahme mit Licht aus einer anderen Richtung erfolgt. Der relativ geringe Zeitabstand zwischen den Aufnahmen ist günstig, da auch beispielsweise Gasbläschen und nicht gelöste Bestandteile innerhalb der Flüssigkeit im Laufe der Zeit ihre Position verändern und sich daher aus diesem Grunde auch die aufgenommenen Bilder unterscheiden könnten.

Bei einer weiteren vorteilhaften Ausführungsform weist die Vorrichtung eine Vergleichseinrichtung auf, welche die zwei über unterschiedliche Aufnahmepfade aufgenommenen Bilder miteinander vergleicht. So ist es möglich, dass die Aufnahmen untereinander verglichen werden und die Stellen, die in mehreren d. h. mindestens zwei Aufnahmen sichtbar werden, der Kategorie Gasbläschen oder Feststoff zugeordnet werden. Ist eine Stelle in einer Aufnahme sichtbar und in einer anderen nicht, kann dies der Kategorie Glasscherbe zugeordnet werden.

Im einfachsten Fall genügt ein Satz von Aufnahmen zu einem Zeitpunkt. Wird die Unterscheidung von Glasscherben zu Glaswülsten oder ähnlichen gefordert oder neigt die Ausführung der Lichtrichtung der Behälter und Beobachter dazu, dass nicht mit einem Satz von Aufnahmen zu einem Zeitpunkt die Glasscherbe eindeutig erkannt wird, empfiehlt es sich, mehrere Sätze von Aufnahmen an mehreren Zeitpunkten durchzuführen. Während die Glasscherbe relativ zum Beobachter in Bewegung ist, werden die Zeitpunkte frei gewählt. Dabei kann der Behälter selbst relativ zum Beobachter stehen oder der Behälter relativ zum Beobachter an verschiedenen Zeitpunkten immer wieder die gleiche Position einnehmen. So wäre es denkbar, dass sich der Behälter mit einer vorgegebenen Drehzahl dreht und die Aufnahmen jeweils mit den Perioden dieser Drehungen durchgeführt werden. Vorteilhaft handelt es sich bei den Behältnissen um Glasbehältnisse und insbesondere um Glasflaschen.

Bei einer weiteren vorteilhaften Ausführungsform ist die Bildaufnahmeeinrichtung unterhalb des Behältnisses angeordnet. Dies ist insofern günstig, da sich die zu beobachtenden Störteile wie Scherben üblicherweise am Boden des Behältnisses ablegen und daher auf diese Weise erkennbar sind.

Vorteilhaft beleuchtet wenigstens eine Strahlungseinrichtung eine Seitenwand des Behältnisses. Daher wird bei dem hier vorgeschlagenen Verfahren im Auflichtverfahren gemessen, so dass stets nur solches Licht von der Bildaufnahmeeinrichtung aufgenommen wird, welches durch die Flüssigkeit umgelenkt wurde.

Bei einer weiteren vorteilhaften Ausführungsform weist die Vorrichtung eine Transporteinrichtung zum Transportieren der Behältnisse auf. So sind insbesondere die Strahlungseinrichtungen und die Bildaufnahmeeinrichtungen stationär angeordnet und die Behältnisse werden an den Strahlungs- und Bildaufnahmeeinrichtungen vorbeigeführt. Dabei ist vorteilhaft die Transporteinrichtung derart gestaltet, dass der Boden der Behältnisse frei bleibt. Vorteilhaft weisen die Transporteinrichtungen ein Führungsmittel auf, welches die Behältnisse an deren Hals führt. Es wäre jedoch auch denkbar, dass die Führungseinrichtungen an einer Seitenwand der Behältnisse angreifen.

Bei einer weiteren vorteilhaften Ausführungsform bewegt sich wenigstens eine Bildaufnahmeeinrichtung wenigstens abschnittsweise mit den zu inspizierenden Behältnissen mit. So können beispielsweise an einem drehbaren Träger eine Vielzahl von Halteeinrichtungen für die Behältnisse angeordnet sein, sowie auch eine Vielzahl von Bildaufnahmeeinrichtungen, die sich mit den Behältnissen mitbewegen. Vorteilhaft ist dabei jeder der genannten Halteeinrichtung eine Bildaufnahmeeinheit zugeordnet. Vorteilhaft ist für jedes zu inspizierende Behältnis genau eine Bildaufnahmeeinrichtung vorgesehen, es werden also bevorzugt nur aus einer vorgegebenen (Kamera)perspektive Bilder aufgenommen.

Die wenigstens eine Strahlungseinrichtung kann sich ebenfalls mit den Behältnissen mitbewegen, bevorzugt ist jedoch die wenigstens eine Strahlungseinrichtung stationär angeordnet, bewegt sich also nicht mit den Behältnissen mit. Dabei ist zu beachten, dass die genaue Relativposition der Strahlungseinrichtung gegenüber den sich bewegenden Behältnissen weniger kritisch ist als die Position der Bildaufnahmeeinrichtung.

Vorteilhaft steuert eine Steuerungseinrichtung die Strahlungseinrichtungen in Abhängigkeit von einer Bewegung der Behältnisse und insbesondere einer Bewegung in der Transportrichtung der Behältnisse. Vorteilhaft werden die Behältnisse entlang eines geradlinigen Pfades geführt. Vorteilhaft weist die Vorrichtung auch eine Positionserfassungseinrichtung (wie etwa eine Lichtschranke) auf, welche die Position der Behältnisse in der Transportrichtung erfasst. Dabei werden bevorzugt die Behältnisse auch individualisiert, d.h. einer Steuereinrichtung ist im Wesentlichen zu jedem Zeitpunkt bekannt, an welcher Position in der Transportrichtung sich ein bestimmtes Behältnis gerade befindet. Auf diese Weise ist ein individuelles Ausschleusen bestimmter Behältnisse, welche bzw. deren Inhalt als fehlerhaft erkannt wurden, möglich. Eine derartige Individualisierungseinheit kann sich aus einer oder mehreren Positionserfassungseinrichtungen zusammensetzen, welche (ggfs. über eine Steuerungseinrichtung) in Kommunikationsverbindung mit der Transporteinrichtung, welche die Behältnisse fördert, stehen.

Wie oben erwähnt, können die besagten Aufnahmen auch kurz nacheinander genommen werden wobei jedoch bevorzugt die Aufnahmen so dicht aufeinander folgen, dass die Bewegungen der Objekte keine relevante Rolle spielen. Dabei ist es, wie oben erwähnt, sowohl möglich, eine Kamera als auch mehrere Kameras einzusetzen, um kurz hintereinander Bilder aufzunehmen. Es wäre daher auch möglich, dass sowohl mehrere Kameras Verwendung finden als auch mehrere Strahlungseinrichtungen, oder aber eine bewegliche Strahlungs- bzw. Bildaufnahmeeinrichtung.

Vorteilhaft strahlen die Strahlungseinrichtungen diffuses Licht auf die Flüssigkeit ein. So wäre es möglich, dass zwischen Strahlungseinrichtungen und der Flüssigkeit Lichtstreueinrichtungen wie Mattscheiben angeordnet sind. Es wäre jedoch auch möglich, dass die Strahlung indirekt (etwa über Spiegel) auf die Flüssigkeit gerichtet wird und es wäre weiterhin vorteilhaft möglich, dass zwischen der Strahlungseinrichtung und dem Behältnis diffraktive Elemente wie Linsen oder dergleichen angeordnet sind. Auch könnten hier Fresnellinsen Anwendung finden.

So könnte zwischen dem Behältnis und der Bildaufnahmeeinrichtung eine Optik, beispielsweise eine Linse vorgesehen sein, welche insbesondere denjenigen Bereich des Behältnisses auf der Bildaufnahmeeinrichtung abbildet, in dem eine erhöhte Wahrscheinlichkeit für das Auftreten von unerwünschten Fremdkörpern vorliegt. So könnte beispielsweise insbesondere der Boden des Behältnisses oder der über dem Boden liegende Abschnitt der Flüssigkeit abgebildet werden, da sich beispielsweise Glasscherben am Boden ablegen.

Auch wäre es möglich, zur Unterscheidung der Lichtrichtung unterschiedliche Wellenlängen zu benutzen. So könnte beispielsweise eine Strahlungseinrichtung Rotlicht aussenden und eine weitere Strahlungseinrichtung grünes Licht. Die Trennung der Aufnahmen mit unterschiedlichen Lichtrichtungen und Wellenlängen könnte in einer Aufnahme mit einer Farbkamera erfolgen. In diesem Falle wäre es möglich die Aufnahmen im Wesentlichen zeitgleich erfolgen zu lassen. Schwierig ist es jedoch hierbei, zwei gut zu trennende Lichtfarben zu wählen, die gut durch das Produkt und durch das Behältnis gelangen.

Vorteilhaft werden jedoch die Bilder zeitversetzt, bevorzugt mit einer sehr geringen Zeitspanne, insbesondere nahezu zeitgleich aufgenommen.

Die vorliegende Erfindung ist weiterhin auf ein Verfahren zum Inspizieren von befüllten Behältnissen und insbesondere zum Untersuchen von befüllten Behältnissen auf Fremdkörper innerhalb des Behältnisses gerichtet, wobei das Behältnis mit einer ersten Strahlungseinrichtung beleuchtet wird und die von der in dem Behältnis befindlichen Flüssigkeit gestreute oder reflektierte oder allgemein umgelenkte Strahlung wenigstens teilweise von einer ersten Bildaufnahmeeinrichtung aufgenommen wird, wobei die Strahlung entlang eines ersten Bildaufnahmepfads von der ersten Strahlungseinrichtung zu der Bildaufnahmeeinrichtung gelangt und wobei die Bildaufnahmeeinrichtung ein ortsaufgelöstes Bild der auf sie auftreffenden Strahlung aufnimmt. Insbesondere werden dadurch innerhalb der Flüssigkeit befindliche und für die Flüssigkeit spezifische Partikel von in der Flüssigkeit befindlichen Fremdkörpern unterschieden.

Erfindungsgemäß wird die Strahlung entlang eines zweiten Bildaufnahmepfades auf das Behältnis eingestrahlt und die von dem Behältnis bzw. der Flüssigkeit reflektierte und/oder zurückgeworfene Strahlung wird auch hier aufgenommen.

Wie auch bereits in der Bezugnahme auf die erfindungsgemäße Vorrichtung dargestellt ist auch hier ein wesentlicher Gedanke, dass die Flüssigkeiten unter unterschiedlichen Winkeln bzw. Richtungen beleuchtet bzw. unter unterschiedlichen verschiedenen Winkeln ein Bild aufgenommen wird. Auf diese Weise kann zwischen den oben genauer erläuterten Inhalten der Flüssigkeit unterschieden werden.

Erfindungsgemäß werden zwei entlang der beiden unterschiedlichen Bildaufnahmepfade aufgenommene Bilder miteinander verglichen, wobei eine Stelle, die in mehreren Aufnahmen sichtbar ist, einer Kategorie "Gasbläschen und/oder produktspezifische Partikel" zugeordnet wird und eine Stelle, die in einer Aufnahme sichtbar ist und in einer anderen nicht, einer Kategorie "Glasscherbe" zugeordnet wird.

Bei einem bevorzugten Verfahren werden die entlang der beiden Bildaufnahmepfade aufgenommenen Bilder mit einem zeitlichen Abstand zueinander aufgenommen, der unter 500 ps, bevorzugt unter 200 µs und besonders bevorzugt unter 100 µs liegt.

Vorteilhaft werden auch zwei entlang der beiden unterschiedlichen Bildaufnahmenpfade aufgenommene bzw. über die beiden unterschiedlichen Bildaufnahmenpfade aufgenommene Bilder miteinander verglichen.

Bei einem weiteren vorteilhaften Verfahren wird ein Bildvergleich der aufgenommenen Bilder durch eine Auswerteeinrichtung ausgewertet. Bei einem weiteren vorteilhaften Verfahren wird das ausgewertete Bild einem vorgegebenen Ergebnis zugeordnet. Auch ist es möglich, dass aus dem ausgewerteten Bild auf das Vorhandensein von Fremdkörpern in der Flüssigkeit geschlossen wird. So kann im Rahmen der Auswertung beispielsweise ein Differenzbild zwischen den einzelnen Bildern erstellt werden.

Weitere vorteilhafte Ausführungsformen ergeben sich aus den beigefügten Zeichnungen: Darin zeigen:
- Fig. 1: eine Ansicht eines Abschnittes eines Behältnisses;
- Fig. 2a: eine erfindungsgemäße Vorrichtung in einem ersten Beobachtungszustand;
- Fig. 2b: die Vorrichtung aus Fig. 2a in einem zweiten Beobachtungszustand;
- Fig. 3a: ein in dem in Fig. 2a gezeigten Zustand aufgenommenes Bild;
- Fig. 3b: ein in dem in Fig. 2b gezeigten Zustand aufgenommenes Bild; und
- Fig. 4: eine Darstellung zur Veranschaulichung einer erfindungsgemäßen Vorgehensweise.

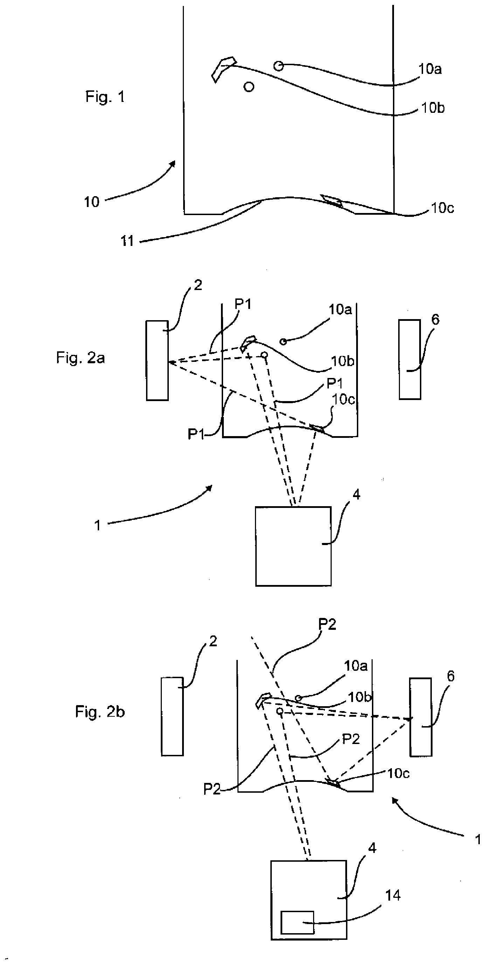

Fig. 1 zeigt einen unteren Abschnitt eines Behältnisses 10. Innerhalb dieses Behältnisses ist bereits eine Flüssigkeit und insbesondere ein Getränk angeordnet. Das Bezugszeichen 10a bezieht sich auf Luftbläschen, die beispielsweise bei einem karbonisierten Getränk auftreten können. Das Bezugszeichen 10b kennzeichnet Schwebstoffe innerhalb des Getränks wie beispielsweise Fruchtstückchen. Auch diese sind erwünscht. Das Bezugszeichen 10c hingegen kennzeichnet einen Störkörper wie beispielsweise Glasscherben, der sich am Boden des Behältnisses befinden kann. Bei diesen Fremdkörpern handelt es sich um diejenigen Körper, welche nicht erwünscht sind bzw. bei deren Vorhandensein die Behältnisse auszuschleusen wären. Das Bezugszeichen 11 kennzeichnet einen Boden des Behältnisses 10.

Fig. 2a zeigt eine erfindungsgemäße Vorrichtung in einem ersten Zustand. Dabei bezieht sich das Bezugszeichen 2 auf eine erste Strahlungs- bzw. Beleuchtungseinrichtung, welche das Behältnis bzw. die in dem Behältnis befindliche Flüssigkeit hier von der Seite her beleuchtet. Unterhalb des Behältnisses befindet sich eine Bildaufnahmeeinrichtung 4, welche ein Bild von dem von der Flüssigkeit der reflektierten bzw. gestreuten Strahlung oder allgemein der umgelenkten Strahlung aufnimmt. Die Bezugszeichen P1 beziehen sich dabei jeweils auf die ersten Aufnahmepfade, die hier von der ersten Beleuchtungseinrichtung 2 über die einzelnen Körper 10a, 10b, 10c zu der Bildaufnahmeeinrichtung 4 verlaufen. Daneben ist eine zweite Strahlungs- bzw. Beleuchtungseinrichtung vorgesehen, welche jedoch bei dem in Fig. 2a gezeigten Zustand nicht aktiviert ist.

Fig. 2b zeigt einen weiteren Beleuchtungszustand, wobei hier die erste Strahlungseinrichtung 2 nicht aktiviert ist, dafür jedoch die zweite Beleuchtungseinrichtung 6. Man erkennt hier jeweils wieder Bildaufnahmepfade P2, wobei jedoch hier der Bildaufnahmepfad P2, der auf den Fremdkörper 10c trifft nicht mehr weiter zu der Bildaufnahmeeinrichtung 4 gelangt sondem in eine andere Richtung gelenkt wird. Daher werden sich die von der Bildaufnahmeeinrichtung 4 aufgenommenen Bilder untereinander unterscheiden. Das Bezugszeichen 14 kennzeichnet dem gemäß eine Vergleichseinrichtung, welche die jeweils aufgenommenen Bilder miteinander vergleicht. Daneben kann die Vorrichtung eine (nicht gezeigte) Transporteinrichtung aufweisen, welche die Behältnisse in einer vorbestimmten Richtung hier beispielsweise senkrecht zur Figurenebene transportiert. Daneben können zwischen den Strahlungseinrichtungen und Bildaufnahmeeinrichtungen Wände vorgesehen sein, welche verhindern, das Licht unmittelbar von der Strahlungseinrichtung 2 bzw. 6 zu der Bildaufnahmeeinrichtung 4 gelangt.

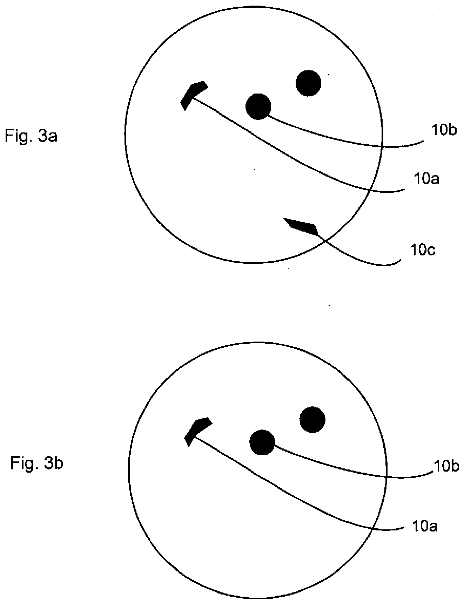

Die Fig. 3a und 3b zeigen zwei aufgenommene Bilder, wobei das Bild in Fig. 3a in dem in Fig. 2a gezeigten Zustand aufgenommen wurde und das in Fig. 3b gezeigte Bild in dem in Fig. 2b gezeigten Zustand. Man erkennt, dass bei dem in Fig. 3b gezeigten Bild der Körper 10c nicht mit abgebildet wird. Auf diese Weise kann durch einen Vergleich der in den Fig. 3a und 3b gezeigten Bilder festgestellt werden, dass es sich bei der Erscheinung 10c möglicherweise um einen Glasscherben handeln könnte.

Vorzugsweise weisen die in Fig. 2a und 2b gezeigten Vorrichtungen jeweils auch noch eine Auswurfeinrichtung auf, welche in Reaktion auf einen durchgeführten Vergleich zwischen den in Fig. 3a und 3b gezeigten Bildern das entsprechende Behältnis, an dem diese Bilder aufgenommen wurden, ausleitet. Daher steht diese Auswurfeinrichtung vorteilhaft in Kommunikationsverbindung mit der Vergleichseinrichtung 14, welche die jeweils aufgenommenen Bilder miteinander vergleicht. Die Auswurfeinrichtung ist dabei vorteilhaft in Transportrichtung der Behältnisse stromabwärts bezüglich der Vorrichtung 1 angeordnet. Zwischen der Vorrichtung 1 und der Auswurfeinrichtung werden die Behältnisse dabei vorteilhaft vereinzelt transportiert, beispielsweise auf einem Transportband, wobei zwischen den einzelnen Behältnissen ein gewisser Abstand besteht. Bei der Auswurfeinrichtung kann es sich beispielsweise um eine Stoßeinrichtung handeln, welche als fehlerhaft erkannte Behältnisse von der Transporteinrichtung herabstößt.

Weiterhin kann eine erfindungsgemäße Vorrichtung auch noch eine Bildausgabeeinheit aufweisen, welche die von der Bildaufnahmeeinrichtung 4 aufgenommenen Bilder an einen Benutzer ausgibt bzw. auch zwei in den Konstellationen von Fig. 2a und Fig. 2b gezeigten Bilder nebeneinander an den Benutzer ausgibt.

In einer vorteilhaften Ausführungsform weist die erfindungsgemäße Vorrichtung eine Speichereinrichtung zum Speichern der aufgenommenen Bilder auf. In dieser Speichereinrichtung kann eine Vielzahl von Bildern des Behältnisses bzw. der Flüssigkeit gespeichert werden. Die Vergleichseinrichtung 14 kann, wie oben erwähnt, zwei aufgenommene Bilder miteinander vergleichen, um so festzustellen, ob sich Fremdkörper wie etwa Glasscherben in der Flüssigkeit befinden. Dabei kann ein Vergleich zwischen den beiden Bildern Pixel für Pixel erfolgen.

Eine Auswerteeinheit kann die von der Vergleichseinrichtung 14 gewonnenen Daten auswerten und so entscheiden, ob sich in der Flüssigkeit nicht gewollte Fremdkörper wie Glasscherben oder nur produktspezifische Partikel befinden. In Reaktion auf ein von der Auswerteeinheit ausgegebenes Ergebnis kann beispielsweise ein Behältnis ausgeschleust werden.

Die wenigstens zwei Bilder werden bevorzugt innerhalb eines Zeitfensters von 1 - 1000µs, bevorzugt 1 - 500 µs, bevorzugt 1 - 100µs, bevorzugt 1 - 50µs, bevorzugt von 1 - 20µs, besonders bevorzugt von 1 - 10µs aufgenommen. Auf diese Weise kann verhindert werden, dass gleiche Partikel in den beiden Bildern an unterschiedlichen Positionen auftaucht, der gleichwohl durch die Zeitdifferenz zwischen den Bildern auftretende Versatz ist vernachlässigbar. Vorteilhaft ist nur eine Bildaufnahmeeinrichtung vorgesehen, um die beiden Bilder aufzunehmen. Dies bedeutet, dass beide Bilder bevorzugt aus der gleichen Richtung aufgenommen werden. Diese Vorgehensweise bietet den Vorteil, dass auch die Konturen der Partikel für den Vergleich verwendet werden können. Bei einer weiteren vorteilhaften Ausführungsform kann die Vorrichtung eine Dreheinrichtung zum Drehen der Behälter um ihre Längsachse aufweisen.

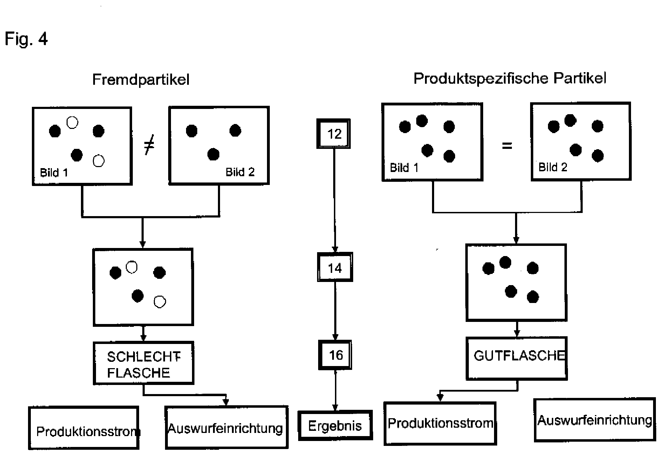

Fig. 4 veranschaulicht die eine Vorgehensweise, um Fremdkörper wie Glasscherben von gewollten Partikeln in der Flüssigkeit zu unterscheiden. In dem linken Teilbild befinden sich in der Flüssigkeit Glasscherben oder andere (insbesondere reflektierende) Fremdkörper, die hier durch leere Kreise dargestellt sind. Die gewollten, produktspezifischen Partikel sind in beiden Bildern durch ausgefüllte Kreise dargestellt.

Diese in der Speichereinrichtung 12 gespeicherten Bilder werden jeweils in der Vergleichseinrichtung 14 miteinander verglichen. So wäre es möglich, dass das Bild 2 von Bild 1 (pixelweise) abgezogen wird und auch umgekehrt Bild 1 von Bild 2 (pixelweise) abgezogen wird. Im ersten Fall würden die beiden durch leere Kreise veranschaulichten Bildteile verbleiben, im zweiten Fall der eine durch den leeren Kreis veranschaulichte Bildteil. Ergibt sich so aus diesem Vergleich, dass diese beiden Bilder nicht übereinstimmen, kann auf Fremdkörper wie Glasscherben geschlossen werden, da für diese Objekte die Streurichtung (bzw. Reflektionsrichtung) unterschiedlich ist. Es wird hierbei vorteilhaft ein Differenzbild erstellt. Eine Auswerteeinrichtung wertet die entsprechenden Vergleiche aus und gibt ein für diesen Vergleich charakteristisches Ergebnis aus.

In Reaktion auf dieses Ergebnis kann die betreffende Flasche ausgeschleust werden. Im rechten Teilbild liegen keine Glasscherben vor, und die aufgenommenen Bilder stimmen überein. Daher kann das betreffende Behältnis im Produktionsstrom verbleiben.

Bei einer vorteilhaften Ausführungsform ist die Bildaufnahmeeinrichtung derart gestaltet, dass sie einen Bereich der Flüssigkeit innerhalb des Behältnisses und insbesondere einen Bereich der Flüssigkeit, der sich unmittelbar oberhalb des Bodens des Behältnisses befindet, (insbesondere scharf) abbildet. Dabei kann vorteilhaft diese Bildaufnahmeeinrichtung derart gestaltet sein, dass sie den Boden des Behältnisses selbst nicht scharf abbildet. Auf diese Weise kann ein Vergleich gerade im Hinblick auf die in dem Behältnis befindliche Flüssigkeit erfolgen. Weiterhin kann ein zuvor aufgenommenes Referenzbild dazu dienen, dass die Behältereigenschaften bzw. behälterspezifischen Merkmale aus den aktuell aufgenommenen Bildern der Flüssigkeit herausgerechnet werden, wenn beispielsweise die Tiefenschärfe der Bildaufnahmeeinrichtung nur schwer einstellbar ist.

### Bezugszeichenliste

- 1: Vorrichtung
- 2, 6: Strahlungseinrichtung
- 4: Bildaufnahmeeinrichtung
- 10: Behältnis
- 10a: Luftbläschen
- 10b: Schwebstoff
- 10c: Störkörper
- 11: Boden des Behältnisses 10
- 12: Speichereinrichtung
- 14: Vergleichseinrichtung
- 16: Auswerteeinrichtung

- P1, P2: Bildaufnahmepfad

## Patentansprüche

1. Verfahren zum Inspizieren von befüllten Behältnissen, wobei die in dem Behältnis befindliche Flüssigkeit (10) mit einer ersten Strahlungseinrichtung (2) beleuchtet wird und die von der in dem Behältnis befindlichen Flüssigkeit gestreute und/oder reflektierte Strahlung wenigstens teilweise von einer ersten Bildaufnahmeeinrichtung (4) aufgenommen wird, wobei die Strahlung entlang eines ersten Bildaufnahmepfades (P1) von der ersten Strahlungseinrichtung zu der Bildaufnahmeeinrichtung (4) gelangt und die Bildaufnahmeeinrichtung (4) ein ortsaufgelöstes Bild der auf sie auftreffenden Strahlung aufnimmt und mit einer weiteren Strahlungseinrichtung (6), welche Strahlung entlang eines zweiten Bildaufnahmepfades (P2) auf das Behältnis (10) einstrahlt und die von dem Behältnis (10) reflektierte und/oder zurückgeworfene Strahlung aufgenommen wird um innerhalb der Flüssigkeit befindliche und für die Flüssigkeit spezifische Partikel von in der Flüssigkeit befindlichen Fremdkörpern zu unterscheiden,
**dadurch gekennzeichnet, dass**
zwei entlang der beiden unterschiedlichen Bildaufnahmepfade aufgenommene Bilder miteinander verglichen werden, wobei eine Stelle, die in mehreren Aufnahmen sichtbar ist, einer Kategorie "Gasbläschen und/oder produktspezifische Partikel" zugeordnet wird und eine Stelle, die in einer Aufnahme sichtbar ist und in einer anderen nicht, einer Kategorie "Glasscherbe" zugeordnet wird, wobei die zwei Strahlungseinrichtungen (2, 6) an unterschiedlichen Positionen angeordnet sind und das Behältnis (10) bzw. dessen Inhalt aus unterschiedlichen Richtungen beleuchten und nur eine Bildaufnahmeeinrichtung (4) vorgesehen ist, um die beiden Bilder aufzunehmen, wobei diese Bilder aus der gleichen Richtung aufgenommen werden und die Bildaufnahmeeinrichtung (4) unterhalb des Behältnisses (10) angeordnet ist.

2. Verfahren nach Anspruch 1,
**dadurch gekennzeichnet, dass**
das zwei entlang der beiden Bildaufnahmepfaden aufgenommene Bilder mit einem zeitlichen Abstand zueinander aufgenommen werden, der unter 500µs, bevorzugt unter 200µs und besonders bevorzugt unter 100µs liegt.

3. Verfahren nach Anspruch 1-2,
**dadurch gekennzeichnet, dass**
der Bildvergleich der aufgenommenen Bilder durch eine Auswerteeinrichtung ausgewertet wird.

4. Verfahren nach Anspruch 3,
**dadurch gekennzeichnet, dass**
das ausgewertete Bild einem vorgegebenen Ergebnis zugeordnet wird.

5. Vorrichtung (1) zum Inspizieren von befüllten Behältnissen (10) mit einer ersten
Strahlungseinrichtung (2), welche dazu eingerichtet ist, Strahlung auf die in dem Behältnis (10) befindliche zu untersuchende Flüssigkeit zu richten mit einer Bildaufnahmeeinrichtung (4), welche dazu eingerichtet ist, wenigstens einen Teil der von der ersten Strahlungseinrichtung (2) auf die Flüssigkeit gerichteten und von dem Behältnis (10) reflektierten oder gestreuten Strahlung aufzunehmen wobei die Bildaufnahmeeinrichtung zur Aufnahme eines ortsaufgelösten Bildes ausgelegt ist, die Vorrichtung (1) wenigstens eine weitere Strahlungseinrichtung (6) aufweist, wobei die Strahlungseinrichtungen (2, 6) und die Bildaufnahmeeinrichtung (4) derart angeordnet sind, dass eine Beobachtung der Flüssigkeit unter wenigstens zwei voneinander unterschiedlichen Bildaufnahmepfaden (P1, P2) erfolgt,
**dadurch gekennzeichnet, dass**
die Vorrichtung (1) eine Vergleichseinrichtung (14) aufweist, welche dazu eingerichtet ist, die zwei über unterschiedliche Aufnahmepfade aufgenommene Bilder miteinander zu vergleichen und die Vorrichtung (1) weiterhin eine Auswerteeinheit aufweist, die dazu eingerichtet ist, die von der Vergleichseinrichtung (14) gewonnenen Daten auszuwerten, so dass eine Stelle, die in mehreren Aufnahmen sichtbar ist, einer Kategorie "Gasbläschen und/oder produktspezifische Partikel" zugeordnet wird und eine Stelle, die in einer Aufnahme sichtbar ist und in einer anderen nicht, einer Kategorie "Glasscherbe" zugeordnet wird, wobei die zwei Strahlungseinrichtungen (2, 6) an unterschiedlichen Positionen angeordnet sind und dazu eingerichtet sind, das Behältnis (10) bzw. dessen Inhalt aus unterschiedlicher Richtungen zu beleuchten und nur eine Bildaufnahmeeinrichtung (4) vorgesehen ist, um die beiden Bilder aufzunehmen, wobei diese Bilder aus der gleichen Richtung aufgenommen werden und die Bildaufnahmeeinrichtung (4) unterhalb des Behältnisses (10) angeordnet ist.

6. Vorrichtung (1) nach Anspruch 5
**dadurch gekennzeichnet, dass**
die Vorrichtung eine Steuerungseinrichtung aufweist, welche dazu eingerichtet ist zu bewirken, dass Bildaufnahmen über die unterschiedlichen Aufnahmepfade innerhalb eines Zeitabschnitts erfolgen, der unter 500µs, bevorzugt unter 300µs und besonders bevorzugt unter 100µs liegt.

7. Vorrichtung (1) nach wenigstens einem der vorangegangenen Ansprüche 5 - 6,
**dadurch gekennzeichnet, dass**
wenigstens eine der Strahlungseinrichtungen (2, 6) dazu eingerichtet ist, eine Seitenwand des Behältnisses (10) zu beleuchten.

8. Vorrichtung (1) nach wenigstens einem der vorangegangenen Ansprüche 5 - 7,
**dadurch gekennzeichnet, dass**
die Vorrichtung (1) eine Transporteinrichtung (14) zum Transportieren der Behältnisse aufweist.

## Claims

1. A method for inspecting filled containers, wherein the liquid (10) located in the container is illuminated with a first radiation device (2) and the radiation scattered and/or reflected by the liquid located in the container is recorded at least partially by a first image-recording device (4), wherein the radiation passes along a first image-recording path (P1) from the first radiation device to the image-recording device (4) and the image-recording device (4) records a spatially resolved image of the radiation striking it and with a further radiation device (6), which radiates radiation along a second image-recording path (P2) onto the container (10) and the radiation reflected and/or thrown back by the container (10) is recorded in order to distinguish particles located within the liquid and specific for the liquid from foreign objects located in the liquid, **characterized in that**
the two images taken along the two different image-recording paths are compared with one another, wherein a location which is visible in several images is assigned to a category "gas bubbles and/or product-specific particles" and a location which is visible in one image and not in another one is assigned to a category "broken glass", wherein the two radiation devices (2, 6) are arranged at different positions and illuminate the container (10) or its content from different directions, and only one image-recording device (4) is provided to record the two images, wherein these images are taken from the same direction and the image-recording device (4) is arranged underneath the container (10).

2. The method according to claim 1,
**characterized in that**
the two images recorded along the two image-recording paths are recorded with a time span with respect to each other which is less than 500 µs, preferably less than 200 µs, and particularly preferred less than 100 µs.

3. The method according to claims 1 to 2,
**characterized in that**
the image comparison of the recorded images is evaluated by an evaluation device.

4. The method according to claim 3,
**characterized in that**
the evaluated image is assigned to a pre-set result.

5. An apparatus (1) for the inspection of filled containers (10) with a first radiation device (2) which is configured to direct radiation onto the liquid to be inspected and located in the container (10), with an image-recording device (4) which is configured to record at least a part of the radiation directed from the first radiation device (2) onto the liquid and reflected or scattered by the container (10), wherein the image-recording device is designed for recording a spatially resolved image, wherein the apparatus has at least one further radiation device (6), wherein the radiation devices (2, 6) and the image-recording device (4) are arranged in such a way that an observation of the liquid is carried out on at least two image-recording paths (P1, P2) which are different from each other,
**characterized in that**
the apparatus (1) has a comparator device (14) which is configured to compare the two images recorded over different recording paths with each other and the apparatus (1) has an evaluation device, which is configured to evaluate data gained by the comparison device (14) so that a location which is visible in several images is assigned to a category "gas bubbles and/or product-specific particles" and a location which is visible in one image and not in another one is assigned to a category "broken glass", wherein the two radiation devices (2, 6) are arranged at different positions and are configured to illuminate the container (10) or its content from different directions, and only one image-recording device (4) is provided to record the two images, wherein these images are taken from the same direction and the image-recording device (4) is arranged underneath the container (10).

6. The apparatus (1) according to claim 5,
**characterized in that**
the apparatus has a control device which is configured to effect that image recordings are made over the different recording paths within a time span which is less than 500 µs, preferably less than 300 µs, and particularly preferred less than 100 µs.

7. The apparatus (1) according to at least one of the preceding claims 5 to 6,
**characterized in that**
at least one of the radiation devices (2, 6) is configured to illuminate a lateral wall of the container (10).

8. The apparatus (1) according to at least one of the preceding claims 5 to 7,
**characterized in that**
the apparatus (1) has a conveying device (14) for conveying the containers.

## Revendications

1. Procédé pour inspecter des contenants remplis, dans lequel le liquide (10) se trouvant dans le contenant est éclairé avec un premier système de rayonnement (2) et le rayonnement diffusé et/ou réfléchi par le liquide se trouvant dans le contenant est reçu au moins en partie par un premier système d'acquisition d'image (4), dans lequel le rayonnement parvient le long d'un premier chemin d'acquisition d'image (P1) du premier système de rayonnement au système d'acquisition d'image (4) et le système d'acquisition d'image (4) acquiert une image à résolution spatiale du rayonnement incident sur celui-ci et avec un autre système de rayonnement (6), lequel rayonnement irradie le long d'un deuxième chemin d'acquisition d'image (P2) sur le contenant (10) et le rayonnement réfléchi et/ou renvoyé par le contenant (10) est reçu pour différencier les particules se trouvant à l'intérieur du liquide et spécifiques du liquide de corps étrangers se trouvant dans le liquide,
**caractérisé en ce que**
deux images acquises le long des deux chemins d'acquisition d'image différents sont comparées l'une à l'autre, dans lequel un emplacement, qui est visible dans plusieurs acquisitions, est associé à une catégorie « petites bulles de gaz et/ou particules spécifiques au produit » et un emplacement, qui est visible dans une acquisition et pas dans une autre, est associé à une catégorie « débris de verre », dans lequel les deux systèmes de rayonnement (2, 6) sont disposés dans différentes positions et éclairent le contenant (10) ou son contenu à partir de différentes directions et un seul système d'acquisition d'image (4) est prévu pour acquérir les deux images, dans lequel ces images sont acquises à partir de la même direction et le système d'acquisition d'image (4) est disposé au-dessous du contenant (10).

2. Procédé selon la revendication 1,
**caractérisé en ce que**
les deux images acquises le long des deux chemins d'acquisition d'image sont acquises avec un intervalle de temps l'une par rapport à l'autre, qui se situe au-dessous de 500 µs, de préférence au-dessous de 200 µs et de manière particulièrement préférée au-dessous de 100 µs.

3. Procédé selon la revendication 1-2,
**caractérisé en ce que**
la comparaison d'images des images acquises est évaluée par un système d'évaluation.

4. Procédé selon la revendication 3,
**caractérisé en ce que**
l'image évaluée est associée à un résultat prédéfini.

5. Dispositif (1) pour inspecter des contenants (10) remplis avec un premier système de rayonnement (2), lequel est conçu pour diriger un rayonnement sur le liquide à analyser se trouvant dans le contenant (10) avec un système d'acquisition d'image (4), lequel est conçu pour recevoir au moins une partie du rayonnement dirigé à partir du premier système de rayonnement (2) sur le liquide et réfléchi ou diffusé par le contenant (10), dans lequel le système d'acquisition d'image est configuré pour l'acquisition d'une image spatialement résolue, le dispositif (1) présente au moins un autre système de rayonnement (6), dans lequel les systèmes de rayonnement (2, 6) et le système d'acquisition d'image (4) sont disposés de telle sorte qu'une observation du liquide s'effectue parmi au moins deux chemins d'acquisition d'image (P1, P2) différents l'un de l'autre,
**caractérisé en ce que**
le dispositif (1) présente un système de comparaison (14), lequel est conçu pour comparer les deux images acquises par l'intermédiaire de chemins d'acquisition différents l'une à l'autre et le dispositif (1) présente en outre une unité d'évaluation, qui est conçue pour évaluer les données obtenues par le système de comparaison (14), de sorte qu'un emplacement, qui est visible dans plusieurs acquisitions, est associé à une catégorie « petites bulles de gaz et/ou particules spécifiques au produit » et un emplacement, qui est visible dans une acquisition et pas dans une autre, est associé à une catégorie « débris de verre », dans lequel les deux systèmes de rayonnement (2, 6) sont disposés dans différentes positions et sont conçus pour éclairer le contenant (10) ou son contenu à partir de différentes directions et un seul système d'acquisition d'image (4) est prévu pour acquérir les deux images, dans lequel ces images sont acquises à partir de la même direction et le système d'acquisition d'image (4) est disposé au-dessous du contenant (10).

6. Dispositif (1) selon la revendication 5,
**caractérisé en ce que**
le dispositif comporte un système de commande, lequel est conçu pour amener des acquisitions d'images à s'effectuer par l'intermédiaire de chemins d'acquisition différents à l'intérieur d'un intervalle de temps qui se situe au-dessous de 500 µs, de préférence au-dessous de 300 µs et de manière particulièrement préférée au-dessous de 100 µs.

7. Dispositif (1) selon au moins l'une des revendications précédentes 5 à 6, **caractérisé en ce que**
au moins un des systèmes de rayonnement (2, 6) est conçu pour éclairer une paroi latérale du contenant (10).

8. Dispositif (1) selon au moins l'une des revendications précédentes 5 à 7, **caractérisé en ce que**
le dispositif (1) présente un système de transport (14) pour transporter les contenants.
